# EUROPEAN PATENT APPLICATION

(11) **EP 1 175 112 A1**
(43) Date of publication of application: **23.01.2002**
(21) Application number: 00306071.2
(22) Date of filing: 17.07.2000
(51) Int. Cl.: H04Q 7/32

(54) **Loading software into a mobile device**

(71) Applicant: LUCENT TECHNOLOGIES INC., Murray Hill, New Jersey 07974-0636 (US)
(72) Inventor: Malek, Moni, 81675 München (DE)
(74) Representative: Williams, David John

(57) **Abstract**

Software is loaded into a mobile device, in particular a mobile telephone, said mobile device comprising a program memory for storing said software, a processing unit capable of accessing said program memory and of executing said software stored therein, and a rechargeable battery for powering at least said processing unit, said mobile device being connectable to an external battery charger for charging said battery, said battery charger comprising a storage memory containing said software to be loaded into said mobile device, by establishing a data transmission link between said battery charger and said mobile device, and by loading said software from said storage memory of said battery charger into said program memory of said mobile device via said data transmission link.

## Description

The present invention concerns the field of mobile devices having a software component. Such devices are, for example, mobile (cellular or wireless) telephones. In particular, the present invention concerns the field of loading software into such mobile devices.

Modern mobile devices often comprise large amounts of software stored in a program memory. In operation, a processing unit of the mobile device accesses the program memory and executes the software routines contained therein for providing the desired functionality.

Many mobile devices presently on the market employ a type of program memory that can only be programmed once and/or with substantial effort. For example, the program memory may comprise ROM, PROM or EPROM chips. This design has the disadvantage that it is difficult or impossible to modify the software that is stored in the program memory.

It is also known to equip mobile devices with program memory that can be re-programmed by the user or by a service technician. For example, EEPROM and FLASH memory chips may be used to implement this type of program memory. Although EEPROM and FLASH memory is rather costly, the increased flexibility may well be worth the expense. Re-programming the mobile device is generally seen as an emergency or service measure requiring special equipment and/or knowledge. The whole process is cumbersome and is not intended for the average consumer.

In the context of mobile telephones, EP-A-0 804 046 discloses a cellular telephone having two program memories for storing a data processor program each. One of these program memories is active and contains the currently executed program. New program data may be obtained from a communications network via a bi-directional RF channel and may be stored in the other program memory. WO 97/29606 discloses a similar telephone system in which program data is transmitted from a base station to a mobile station for loading into a program memory of the mobile station.

According to EP-A-0 804 046 and WO 97/29606, the software data is transmitted via the radio channel. This causes considerable transmission costs. Furthermore, a substantial part of the total software of the mobile telephone, namely the program routines necessary for the wireless data transmission, must always be available. These program routines must be contained in an extra memory, which is required in addition to the program memory into which the downloaded software is written.

It is therefore an object of the present invention to avoid at least some of the above-mentioned problems and to provide an economical way of loading software into a mobile device as well as corresponding devices from and into which the software is loaded. Further objectives of preferred embodiments of the invention are that the loading procedure is simple to use and does not cause extra costs, and that the necessary hardware is inexpensive or even allows overall cost savings.

The invention comprises a method, a mobile device, a battery charger and a system having the features of the independent claims. The dependent claims define preferred embodiments of the present invention.

The invention is based on the idea to use the battery charger not only for re-charging a battery of the mobile device, but also for storing software that may be loaded into the program memory of the mobile device. Thus, the operating software of the mobile device may be re-loaded and/or updated and/or changed each time the battery is charged. This provides a great deal of flexibility in a very user-friendly way. In some embodiments, the user will not even notice that software is loaded into the mobile device when he or she connects the mobile device to the battery charger. In other embodiments, the user is informed of the loading process and may be allowed to control some of its parameters.

As an example of the possible use of the present invention, some mobile devices require different software for different countries or regions. The most economical way of handling this situation might well be to manufacture only a single type of the mobile device in large numbers, and to provide the necessary customization by means of a variety of different battery chargers containing the localized software versions. Different battery chargers are needed in any case since different types of AC power plugs and different power characteristics (voltage, frequency) are used in the individual regions. For example, a battery charger designed for the US market will normally only be used in the US, such that the software required by the mobile apparatus for operation in the US could be stored therein.

In a modification of the application example given above, the storage memory of the battery charger could also be large enough to hold a plurality of software items. For example, these software items may be localized versions of the operating software of the mobile device or program modules implementing special features (e.g., voice dialing, text input, games, etc.). The user could then select which of these software items will be downloaded into the program memory of the mobile device. This solution is particularly suitable if the capacity of the storage memory in the battery charger is larger than the capacity of the program memory in the mobile device since the user could then select and download a desired combination of features within the limitations given by the capacity of the program memory.

In addition to providing a great deal of flexibility, the inventive solution is very economical since cheap, slow memory devices can be used for the storage memory of the battery charger. Also the physical space requirements and the power consumption of the storage memory in the battery charger are of little concern. In contrast to this, the program memory in the mobile device is typically much more expensive since its access speed must match the speed of the processing unit and since space is a premium and power consumption must be low in the mobile device.

In a preferred embodiment of the present invention, the program memory of the mobile device is a volatile memory, i.e. a memory that requires some amount of external power for maintaining its contents. In other words, the data contents of a volatile program memory will be lost if the battery of the mobile telephone becomes completely discharged. For this reason, volatile memory, in spite of being much cheaper than static memory, has up to now generally been considered unsuitable for use as program memory of battery powered mobile devices. This problem has been solved by the present invention, which teaches to restore the contents of the program memory when re-charging the battery by the battery charger.

It is particularly preferred to use a type of memory known as "quasi volatile memory", manufactured by the present applicant, for the program memory (and possibly also for the working memory) of the mobile device. This is a dynamic type of memory that can be optimized during manufacturing for short retention times (in the region of milliseconds) or longer retention times (in the region of days or weeks). This type of memory is much more economical than static RAM, even if the long retention time version is used.

Generally, both the power and the data transmission link may be implemented by any physical means. The power transmission link may, for example, comprise an electrical connection via one or more wire(s) or an inductive connection. The data transmission link may, for example, comprise an electrical connection or a wireless connection using light (e.g. infrared light) or using a short range radio transmitter (e.g. the system known under the trademark Bluetooth). Any kind of serial or parallel data transmission protocol with or without encoding or encryption may be employed for the data transmission link.

In preferred embodiments of the invention, the processes of charging the battery and of loading software into the mobile apparatus take place concurrently, such that the data transmission link for transmitting the software data and the power transmission link for re-charging the battery will be operable at essentially the same time. This is possible if different power and data transmission paths are used, which may also mean that the software data is transmitted via the physical power supply lines of the mobile apparatus using a suitable modulation scheme.

In other embodiments, power and data transmission are performed in a mutually exclusive way. For example, the power transmission can be interrupted after some initial battery charging for transmitting the software data via the same connection. In the terminology used herein, such embodiments still have the feature that the power and data transmission occur substantially at the same time, namely in this case in a quasi-parallel or interleaved fashion.

In the terminology used herein, a program memory is any memory used for storing an executable program. A data transmission link is formed by two matching data transmission interfaces of the mobile apparatus and the battery charger, respectively, and possibly other components like a connector cable and so on. Correspondingly, a power transmission link is formed by two matching power transmission interfaces of the mobile apparatus and the battery charger, respectively, and possibly other components.

Further features, objects and advantages of the invention will become apparent from the following detailed description of two sample embodiments and several alternative embodiments of the invention. Reference is made to the schematic drawings, in which:
Fig. 1 is a block diagram of a mobile telephone according to a sample embodiment of the present invention, and
Fig. 2 and Fig. 3 are block diagrams of battery chargers according to two different sample embodiments of the present invention.

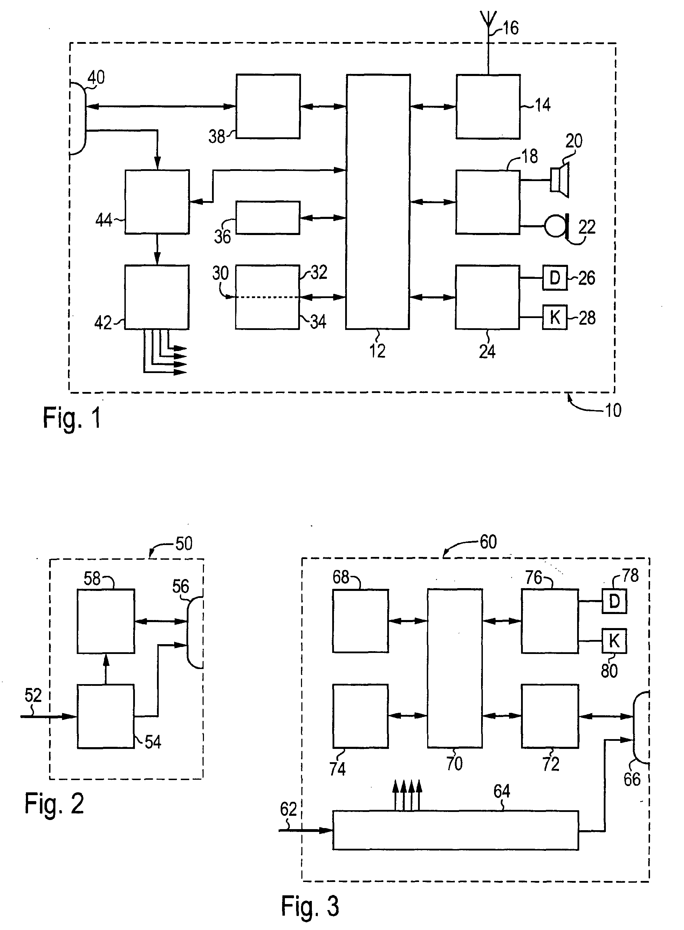

The mobile telephone 10 shown schematically in Fig. 1 comprises a processing unit 12 which may, for example, include a microcontroller and/or a digital signal processor (DSP). The processing unit 12 controls a variety of other components of the mobile telephone 10. A high frequency unit 14 is connected to an antenna 16 and serves for sending and receiving radio signals containing modulated telecommunication data. A voice frequency unit 18 is connected to a speaker 20 and a microphone 22 for transmitting and receiving voice signals from and to a user of the mobile telephone 10. An input/output unit 24 interfaces the processing unit 12 with a display 26 and a keypad 28 for providing user interaction. The units 14, 18 and 24 are each connected to the processing unit 12 and exchange data with each other via the processing unit 12. All components mentioned above are well-known components of mobile telephones and are not, by themselves, the subject of the present invention.

A memory unit 30 comprises a program memory 32 and a working memory 34. The program memory 32 contains software routines controlling the operation of the processing unit 12 and thus the whole mobile telephone 10. The working memory 34 provides space for storing intermediate results and other data required during operation of the mobile telephone 10. A small amount of non-volatile ROM (read only memory) 36 is used to store the minimum program routines necessary to control the process of loading software into the program memory 32.

It is known in prior art mobile telephones to use non-volatile ROM or non-volatile FLASH memory for the program memory 32, and to use volatile RAM for the working memory 34. In the present sample embodiment of the invention, however, a single type of volatile memory is used both for the program memory 32 and for the working memory 34, namely a type of memory known as "quasi volatile memory", manufactured by the present applicant. Furthermore, the memory unit 30 of the present sample embodiment includes suitable circuitry for refreshing the program memory 32 and the working memory 34 on a regular basis, such that the memory contents will be preserved as long as the power supply of the mobile telephone 10 is not exhausted.

Because the program memory 32 and the working memory 34 are implemented using a single memory device or a plurality of identical memory devices, the separation between both kinds of memory 32, 34 is a purely logical one. This is symbolized by the dashed line in Fig. 1 denoting that the program memory 32 and the working memory 34 are simply two logical regions of the memory unit 30. In alternative embodiments, the program memory 32 and the working memory 34 may be implemented by different memory devices. The program memory 32 may be volatile or non-volatile, but is must at least be possible to write software that is loaded into the mobile telephone 10 into the program memory 32.

The mobile telephone 10 further comprises a data transmission unit 38 connected between a connector unit 40 and the processing unit 12. The data transmission unit 38 and the processing unit 12 together implement a variety of communication protocols and allow various kinds of mono-directional and bi-directional data transmission procedures between the mobile telephone 10 and a device connected to the connector unit 40. Of special interest with respect to the present invention is a data transmission mode in which software data is read into the mobile telephone 10, and corresponding software (which may be identical to the software data or may be decoded therefrom) is stored into the program memory 32. In the present sample embodiment, the data transmission unit 38 and parts of the connector unit 40 form a data transmission interface for receiving the software data supplied to the mobile telephone 10.

The connector unit 40 is a multi-pin mechanical connector comprising several contacts for data transmission and also power supply contacts for connecting the mobile telephone 10 to an external power supply. A rechargeable battery 42, for example a NiCd or NiMH or Li-ion accumulator, is connected to the power supply contacts of the connector unit 40 via a charge control unit 44. The charge control unit 44, in cooperation with the processing unit 12, monitors the state of the battery 42 and controls the process of charging the battery 42 by the external power supply. Therefore, in the present sample embodiment, the charge control unit 44 and parts of the connector unit 40 form a power transmission interface for charging the battery 42.

The battery 42 is connected to all other components of the mobile telephone 10 for supplying them with battery power. This is shown schematically in Fig. 1 by a plurality of arrows. In particular, the volatile program memory 32 is also connected to the battery 42. When the mobile telephone 10 is in an active mode of operation, the program memory 32 is fully powered. However, even when the mobile telephone 10 is switched off, the program memory 32 receives sufficient power for maintaining the memory contents. This includes the power required for performing regular refresh cycles of the program memory 32, if the program memory 32 is of a dynamic type that requires refreshing.

Fig. 2 shows the schematic structure of a very simple battery charger 50 designed to work with the mobile telephone 10 of Fig. 1. The battery charger 50 is connected to the mains via a power line 52. A power supply unit 54, which may comprise a conventional transformer and rectifier or may be a switched power supply, generates the low voltage required by the mobile telephone 10. This low voltage, which may be in the region of 2.4 V or 3.3 V or 5 V, is applied to power supply pins of a multi-pin connector unit 56 matching the connector unit 40 of the mobile telephone 10.

The battery charger 50 further comprises a storage memory 58, which is implemented by inexpensive, slow, non-volatile ROM devices. The storage memory 58 contains a backup copy of the software routines that are required by the mobile telephone 10 and are normally stored in the program memory 32. The software data stored in the storage memory 58 may be identical to the final executable software, or it may be encoded in a suitable way (e.g., by including redundant check information or by encryption).

The storage memory 58 receives its operating power from the power supply unit 54. Furthermore, the storage memory 58 is connected to data transmission lines of the connector unit 56 for providing a data read-out capability. Therefore the different pins of the connector unit 56 provide both a power transmission interface for charging the battery 42 of the mobile telephone 10 and a data transmission interface for outputting software data from the storage memory 58.

Turning now to Fig. 1 again, the telephony-related modes of operation of the mobile telephone 10 are known per se, such that no detailed description of these functions is necessary. Generally, all functions of the mobile telephone 10 are controlled by the processing unit 12, which in turn accesses the program memory 32 for executing a variety of program routines stored therein. The contents of the volatile program memory 32 are normally preserved because of the constant powering by the battery 42.

If the battery 42 of the mobile telephone 10 is completely discharged (which may, e.g., happen if the mobile telephone 10 is not used for a long time), it is possible that the contents of the program memory 32 are lost. This would render the mobile telephone 10 inoperable even after the battery 42 is re-charged. The mobile telephone 10 is therefore adapted to load the contents of the program memory 32 from the battery charger 50 (Fig. 2).

For re-charging the battery 42 and loading the program memory 32, the user connects the battery charger 50 (Fig. 2) to the mobile telephone 10 (Fig. 1) via the connector units 40, 56, thus establishing both the power and the data transmission links. The connector units 40, 56 may be directly matching male and female connectors, or a suitable cable (not shown) may be used. The process of re-charging the battery 42 under control of the charge control unit 44 commences immediately after the connection is made.

In the particularly cost-effective embodiment presently described, the software downloading process is completely controlled by the processing unit 12 of the mobile telephone 10, the necessary program routines being stored in the non-volatile ROM 36. Only a reset line, a clock line and one or more data line(s) are required for the physical data transmission link between the battery charger 50 and the mobile telephone 10. The processing unit 12 first resets an address counter contained in the storage memory 58 and then sequentially reads out the contents of the storage memory 58 bit by bit (or word by word, if more than one data line is used). The received program data is decoded by the processing unit 12 and is stored in the program memory 32 for future processing.

In the presently described sample embodiment, the process of downloading the program data is commenced and performed automatically, i.e., without user intervention. In alternative embodiments, the user may control the downloading process via the keypad 28 and display 26 of the mobile telephone 10. For example, the user may be presented with a selection menu of different language versions and/or different regional versions and/or different features of the software to be downloaded. Thus the user will be able to customize the operating software of the mobile telephone 10 according to his or her wishes.

Fig. 3 shows a schematic block diagram of a more complex battery charger 60 that can be used instead of the simple battery charger 50 (Fig. 2) in a second sample embodiment of the present invention. The complex battery charger 60 also includes a power line 62, a power supply unit 64, a connector unit 66 and a storage memory 68. A controller 70 is linked to the connector unit 66 via a data transmission unit 72. The controller 70 accesses the storage memory 68 and a working memory 74. The storage memory 68 is of a non-volatile ROM type and contains both the software routines required for operation of the controller 70 and the software data to be downloaded into the mobile telephone 10. In spite of holding the executable program for the controller 70, the storage memory 68 may nevertheless be of a cheap and slow type since the controller 70 has a rather slow operating speed and therefore does not need a fast program memory.

An input/output unit 76 links the controller 70 to a display 78 and a keypad 80. All components of the battery charger 60 are powered by the power supply unit 64. This is shown schematically in Fig. 3 by a plurality of arrows.

In operation of the complex battery charger 60, the controller 70 is used to control the software downloading process alone or in conjunction with the processing unit 12 of the mobile telephone 12. Any required user interaction (in particular, selection of software versions and features to be downloaded into the mobile telephone 10) can be performed via the keypad 80 and the display 78.

In an alternative embodiment in which the download process is entirely controlled by the battery charger 60, a modified version of the mobile telephone 10 (Fig. 1) can be used. The processing unit 12 may be inoperative during the download process in this embodiment, such that the non-volatile ROM 36 may be omitted. Instead, a connection from the connector unit 40 to the program memory 32 (either direct or running via the data transmission unit 38) would be required.

## Claims

1. A method for loading software into a mobile device, in particular a mobile telephone (10), said mobile device comprising a program memory (32) for storing said software, a processing unit (12) capable of accessing said program memory (32) and of executing said software stored therein, and a rechargeable battery (42) for powering at least said processing unit (12), said mobile device being connectable to an external battery charger (50; 60) for charging said battery (42), said battery charger (50; 60) comprising a storage memory (58; 68) containing said software to be loaded into said mobile device, said method comprising the steps of:
- establishing a data transmission link between said battery charger (50; 60) and said mobile device, and
- loading said software from said storage memory (58; 68) of said battery charger (50; 60) into said program memory (32) of said mobile device via said data transmission link.

2. The method of claim 1, further comprising the steps of:
- establishing a power transmission link between said battery charger (50; 60) and said mobile device, and
- charging said battery (42) of said mobile device by said battery charger (50; 60) via said power transmission link.

3. The method of claim 2, wherein said software is loaded into said program memory (32) of said mobile device via said data transmission link while said battery (42) is charged substantially at the same time via said power transmission link.

4. A mobile device, in particular a mobile telephone (10), said mobile device comprising
- a program memory (32) for storing software,
- a processing unit (12) capable of accessing said program memory (32) and of executing said software stored therein,
- a rechargeable battery (42) for powering at least said processing unit (12),
- a power transmission interface (40, 44) for connecting said mobile device to an external battery charger (50; 60) for charging said battery, and
- a data transmission interface (40, 38, 12) for receiving software data from said battery charger (50; 60), and wherein
- said mobile device is adapted for storing said received software data as software in said program memory (32).

5. The mobile device of claim 4, wherein said power transmission interface (40, 44) and said data transmission interface (40, 38, 12) are operable substantially at the same time and/or share a single connector unit (40).

6. The mobile device of claim 4 or claim 5, wherein said battery (42) is further used for powering said program memory (32), and wherein said program memory (32) is of a volatile or quasi volatile type.

7. A battery charger (50; 60) for a mobile device,' in particular a mobile telephone (10), said battery charger (50; 60) comprising:
- a power transmission interface (56; 66) for connecting said battery charger (50; 60) to said mobile device for charging a rechargeable battery (42) of said mobile device,
- a storage memory (58; 68) containing software data to be loaded into said mobile device for storage in a program memory (32) of said mobile device and eventual execution of the stored software by a processing unit (12) of said mobile device,
- a data transmission interface (56; 70, 72, 66) for outputting software data from said storage memory (58; 68) to said mobile device.

8. The battery charger of claim 7, wherein said power transmission interface (56; 66) and said data transmission interface (56; 70, 72, 66) are operable substantially at the same time and/or share a single connector unit (56; 66).

9. The battery charger of claim 7 or claim 8, further comprising a controller (70) for controlling the process of downloading said software data into said mobile device.

10. A system comprising a mobile device, in particular a mobile telephone (10), having the features of one of claims 3 - 6, and a battery charger having the features of one of claims 7 - 9.
